# EUROPEAN PATENT APPLICATION

(11) **EP 1 496 683 A2**
(43) Date of publication of application: **12.01.2005**
(21) Application number: 04254056.7
(22) Date of filing: 07.07.2004
(51) Int. Cl.: H04N 1/00

(54) **Internet facsimile apparatus**

(30) Priority: 09.07.2003 JP 2003194022
(71) Applicant: Ricoh Company Ltd., Tokyo 143-8555 (JP)
(72) Inventor: Kagawa, Tetsuya, Ebina-shi Kanagawa (JP)
(74) Representative: Leeming, John Gerard

(57) **Abstract**

An Internet facsimile apparatus with improved operability is provided that enables providing a given address at the transmission side, and identifying a transmission just from the provided address at the reception side. The Internet facsimile apparatus includes a register unit that registers an address corresponding to a user account that is used for user authentication, an address rewriting unit that rewrites a sender address to the address registered in the register unit corresponding to the user account if the user authentication is successful, and a transmission unit that provides the address rewritten by the address rewriting unit upon conducting the Internet facsimile transmission.

## Description

### 1. Field of the Invention

The present invention relates to an Internet facsimile apparatus that has a user authentication function for identifying its user.

### 2. Description of the Related Art

Recently and continuing, the demand for security measures in a facsimile apparatus is rising. For example, with respect to a facsimile apparatus used by a number of different people, measures for limiting its users and/or measures for unilaterally managing user information pertaining to the limited users in a PC, for example, may be desired. By unilaterally managing the user information, it may not be necessary to register the user information for each apparatus. Also, it is noted that Internet facsimile apparatuses that conduct transmission and reception of facsimile via the Internet are becoming widespread. The Internet facsimile apparatus corresponds to a facsimile apparatus that is capable of attaching image information to an e-mail and transmitting this as a facsimile transmission.

An example of such an Internet facsimile apparatus is disclosed in Japanese Laid-Open Patent Application No. 2002-10008. According to this disclosure, an Internet facsimile apparatus uses an authentication server that is operated by a PC to conduct user authentication, and indicates the user name of the authenticated user in the transmittal document or the cover letter, for example, upon transmitting a facsimile.

However, the Internet facsimile apparatus of the above prior art document is only capable of attaching the user name of the authenticated user in the transmittal document or the cover letter, and other pertinent information such as the e-mail address of the user has to be input manually. Also, in the conventional Internet facsimile apparatus, the address of the apparatus is indicated as the sender address in a facsimile transmission; however, demand is being made that the sender address be replaced by an address that identifies the particular user of the Internet facsimile apparatus when the user can be identified.

The present invention has been conceived in response to one or more problems of the related art, and its object is to provide an Internet facsimile apparatus with improved operability that enables providing a given address at the transmission side, and identifying a transmission just from the provided address at the reception side.

Specifically, it is an object of the present invention to provide an Internet facsimile apparatus that is adapted to conduct Internet facsimile transmission and reception, and user authentication, the apparatus including:
a register unit that registers an address corresponding to a user account that is used for the user authentication;
an address rewriting unit that rewrites a sender address to the address registered in the register unit corresponding to the user account if the user authentication is successful; and
a transmission unit that provides the address rewritten by the address rewriting unit upon conducting the Internet facsimile transmission.

According to an aspect of the present invention, at the reception side, the sender of a facsimile transmission may be identified based on the provided address without having to open the file attached to the facsimile transmission, and the operability of the apparatus may be improved.

In a preferred embodiment of the present invention, the register unit registers the user account in association with a user name and user code. Accordingly, a system with good operability may be maintained.

In another preferred embodiment, the Internet facsimile apparatus of the present invention further includes an address editing unit that edits the address corresponding to the user account, the editing of the address by the address editing unit being allowed only when the user authentication is successful. Accordingly, manipulation of registered addresses may be prevented and operability of the apparatus may be improved.

In another preferred embodiment, the Internet facsimile apparatus of the present invention further includes an assigning unit that assigns a reply address based on the user account if the user authentication is successful; and an assigned address providing unit that provides the reply address assigned by the assigning unit upon conducting the Internet facsimile transmission. Accordingly, the Internet facsimile apparatus may be used for transmitting a communication, but a response to the communication may be sent as an e-mail to an individual terminal apparatus of the specific user of the Internet facsimile apparatus, for example, and operability of the apparatus may be further improved.

### BRIEF DESCRIPTION OF THE DRAWINGS

FIG.1 is a block diagram showing a configuration of an Internet facsimile apparatus according to an embodiment of the present invention;
FIG.2 is a block diagram showing an exemplary connection state of the Internet facsimile apparatus of the present embodiment;
FIG.3 is a diagram showing an example of an initial screen displayed at an Internet facsimile apparatus that limits its users;
FIG.4 is a diagram showing an example of a header of a mail transmission;
FIG.5 is a flowchart illustrating an example of an address rewriting operation conducted in the Internet facsimile apparatus of the present embodiment;
FIG.6 is a table showing associated relations between a user code, a user name, and a user address;
FIG.7 is a flowchart illustrating another example of an address rewriting operation conducted in the Internet facsimile apparatus of the present embodiment;
FIG.8 is a flowchart illustrating an editing operation for editing the user name, the user code, and the user address shown in FIG.6; and
FIG.9 is a diagram showing another example of a header of a mail transmission.

### DESCRIPTION OF THE PREFERRED EMBODIMENTS

In the following, preferred embodiments of the present invention are described with reference to the accompanying drawings.

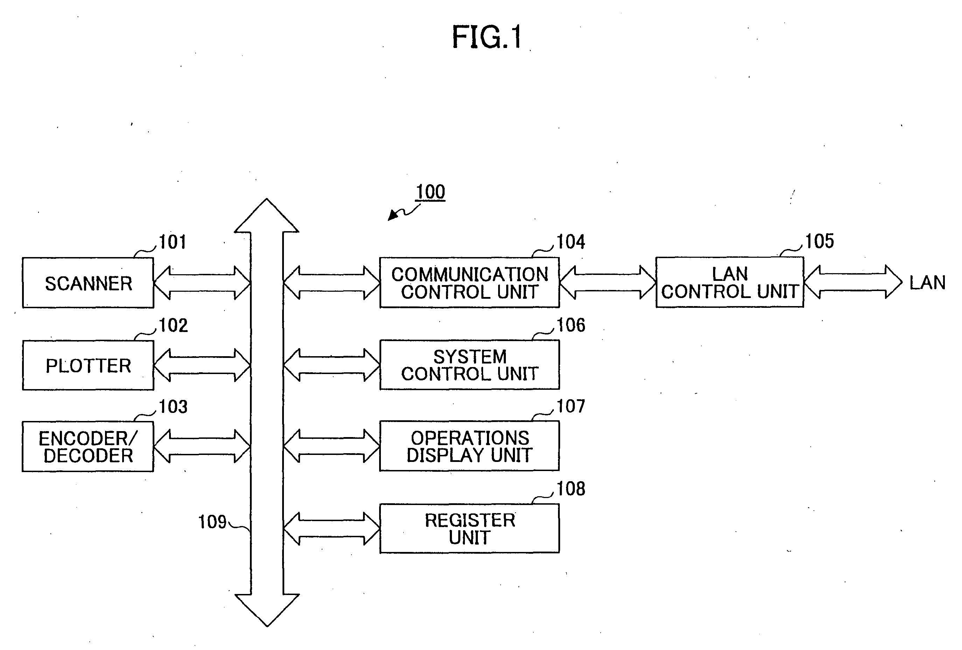

FIG.1 is a block diagram showing a configuration of an Internet facsimile apparatus according to an embodiment of the present invention. The Internet facsimile apparatus 100 shown in FIG.1 includes a scanner 101 for reading an image as a facsimile; a plotter 102 for printing an output such as an image; an encoder/decoder 103 for compressing and decompressing image data; communication control unit 104 for controlling communication protocols; a LAN control unit 105 for administering the transmission and reception of data; a system control unit 106 for performing an authentication process, an address rewriting process, an address editing process, a reply address assigning process, and predetermined facsimile control operations; an operations display unit 107 having display functions and providing an interface for the user; and a register unit 108 that stores corresponding user addresses of registered user accounts. Also, the above hardware components of the Internet facsimile apparatus 100 of the present embodiment are interconnected by a system bus 109.

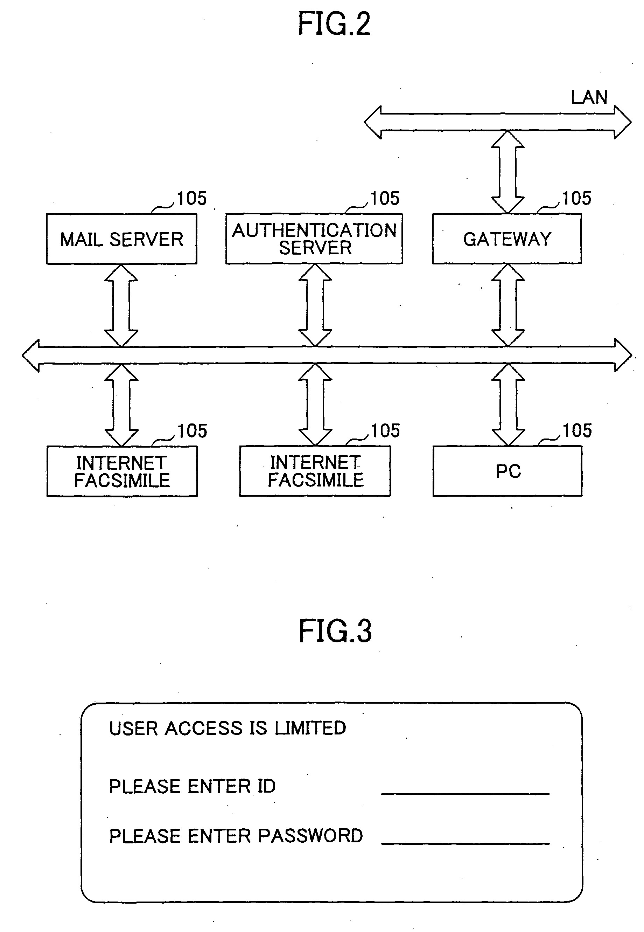

FIG.2 is a block diagram illustrating an exemplary connection state of the Internet facsimile apparatus according to the present embodiment. In this drawing, Internet facsimile apparatuses 201 and 202 are connected to a LAN 203, and are arranged to send documents via a mail server 204. Also, in order to improve security measures, an authentication server 205 is connected to the LAN 203, and a PC 206 may be arranged to conduct user authentication. Further, the Internet facsimile apparatuses 201 and 202 may be connected to other LANs and communication networks via a gateway 207.

FIG.3 is a diagram showing an example of an initial screen displayed at an Internet facsimile apparatus that restricts its users. As is shown in this drawing, user authentication similar to that performed at the PC 206 of FIG.2 may be performed at the Internet facsimile apparatus; that is, the user may be prompted to input an account (ID) and a password. When the input is made, the input data are compared at the authentication server 205 to identify the user.

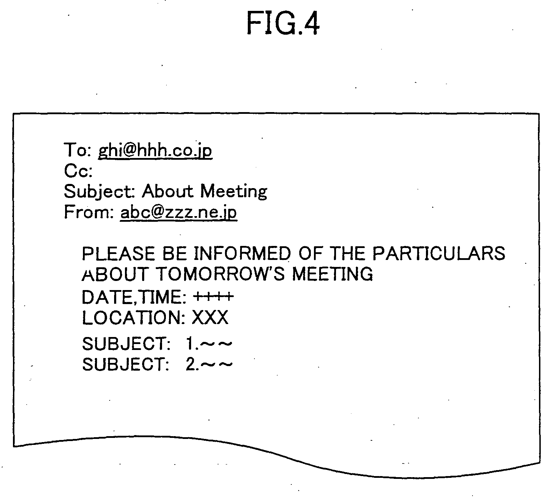

FIG.4 is a diagram illustrating a typical example of a header of an e-mail transmission. As is shown in this drawing, the header of an e-mail transmission generally includes items such as "To:", "Subject:", and "From:", and in the case of an Internet facsimile apparatus that is used by a number of different users, a fixed address of the apparatus is indicated in the "From:" item.

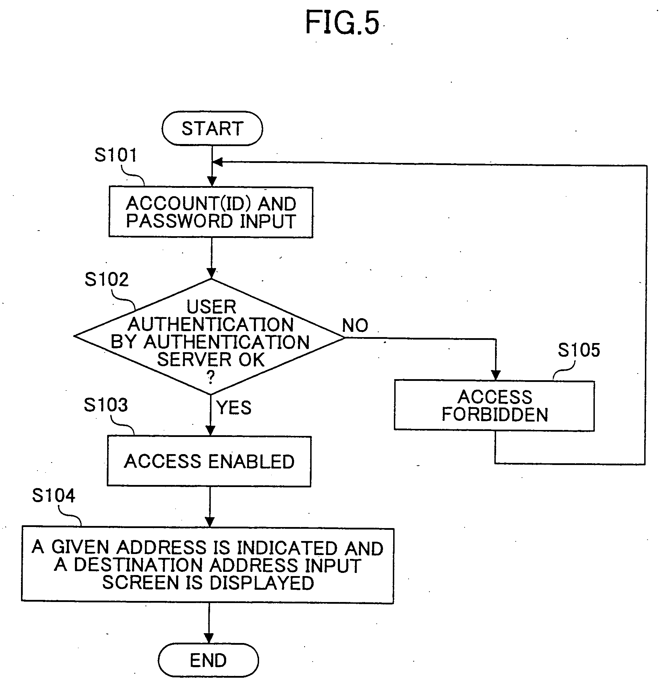

FIG.5 is a flowchart illustrating an address rewriting operation performed in the Internet facsimile apparatus according to the present embodiment. According to this drawing, first, when user authentication is to be conducted, an initial screen such as that shown in FIG. 3 is displayed at the operations display unit 107 of FIG.1 and the user is prompted to input an account (ID) and a password upon starting the operation. When the input is made (S101) , communication is established with the authentication server 205 of FIG.2 via the communication control unit 104 and the LAN control unit 105 of FIG.1, and user authentication is conducted by the system control unit 106 (S102). If the user authentication is successful (S102, YES), the system control unit 106 provides a pre-registered address in the "From:" item and conducts Internet facsimile transmission (S103, S104). On the other hand, if the user authentication is not successful in step S102 (S102, NO), access is forbidden and the process goes back to step S101 where the system control unit 106 prompts the user to input the correct account (ID) and password (S105, S101).

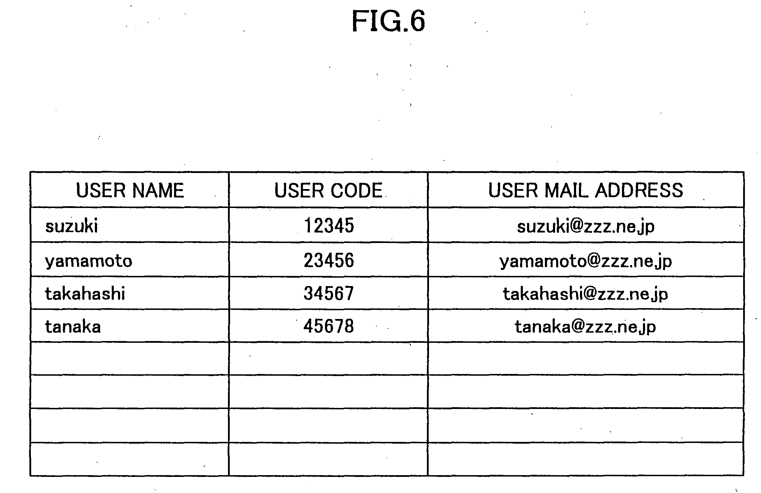

FIG.6 is a table showing the associated relations between a user code, a user name, and a user address. By matching an account of the authentication server with a user name, as is shown in the drawing, the user mail address may be extracted according to the user name.

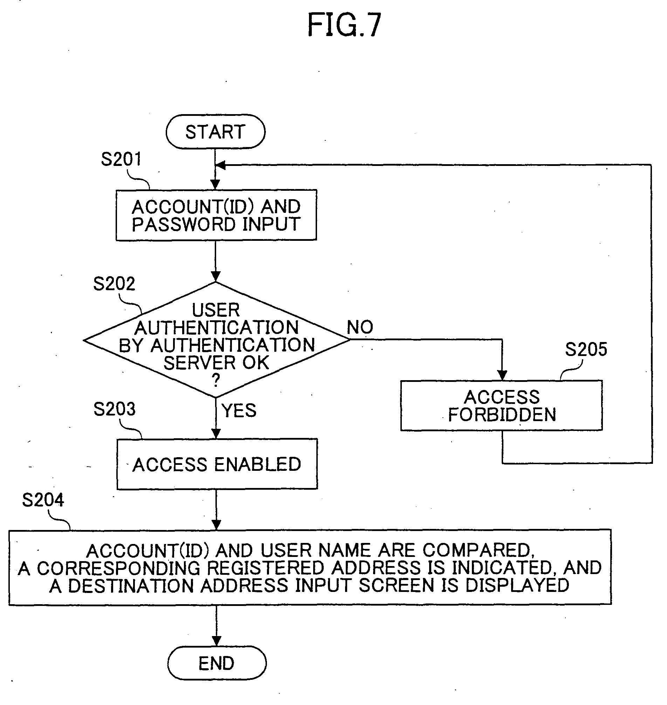

FIG.7 is a flowchart illustrating an address rewriting operation according to another embodiment of the present invention. According to this example, when the user name and the account are matched, a user address corresponding to the user name is extracted and indicated in the "From:" item. Specifically, when user authentication is to be conducted, an initial screen such as that shown in FIG.3 is displayed on the operations display unit 107 of FIG.1, and the user is prompted to input an account (ID) and a password upon starting the operation. When the user makes the input (S201), communication is established between the authentication server 205 of FIG.2 via the communication control unit 104 and the LAN control unit 105 of FIG.1, and user authentication is conducted by the system control unit 106 of FIG.1 (S202). If the user authentication is successful (S202, YES), the system control unit 106 provides a pre-registered address for the "From:" item to enable Internet facsimile transmission. Then, the authentication ID (account) and the user name are compared to see whether there is a match, and if there is a match, the matching registered user address may be used to enable transmission, and a sending address input screen may be displayed (S203, S204). On the other hand, if the user authentication is not successful (S202, NO), access is forbidden and the process goes back to step S201 where the system control unit 106 prompts the user to input the correct account (ID) and password (S205, S201).

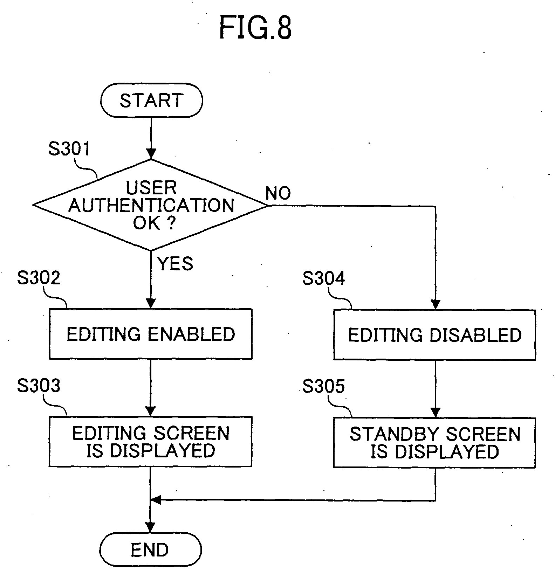

FIG.8 is a flowchart illustrating an editing operation for editing the user name, user code, and user address of FIG.6. The editing operation according to the present example employs an algorithm for disallowing the editing of a user address corresponding to a user name except under certain conditions. Specifically, in this operation, first, it is determined whether a user authentication has been successful (S301). If it is determined that the user authentication has been successful (S301, YES), the editing operation is allowed, and an editing screen is displayed (S302, S303). On the other hand, if it is determined that the user authentication has not been successful (S301, NO), the editing operation is not allowed, and a standby screen is displayed (S304, S305). In this way, unauthorized manipulation of the registered user addresses may be prevented.

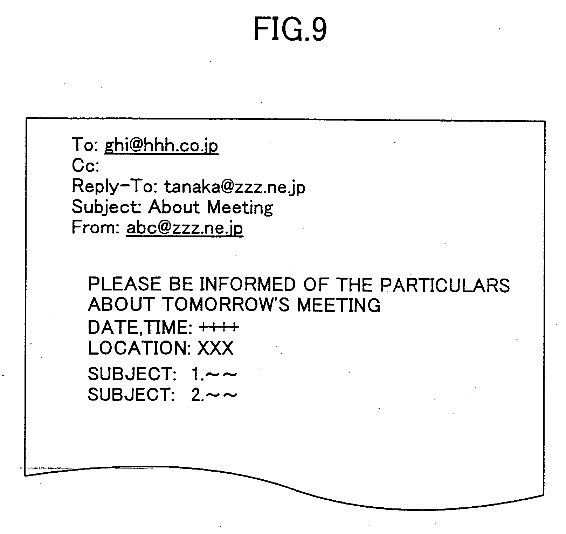

FIG.9 is a diagram showing an example of a header of an e-mail transmission according to the present embodiment. According to this example, the user address is indicated in a "Reply-To:" indication portion rather than the "From:" indication portion. In this way, a user address such as an e-mail address of the PC of an authenticated user may be provided as a reply address, and the Internet facsimile apparatus may be adapted for a wider range of uses, thereby improving its operability.

It is noted that the present invention is not limited to the above described embodiments, and variations and modifications are possible without departing from the scope of the present invention.

The present application is based on and claims the benefit of the earlier filing date of Japanese Patent Application No.2003-194022 filed on July 9, 2003, the entire contents of which are hereby incorporated by reference.

## Claims

1. An Internet facsimile apparatus that is adapted to conduct Internet facsimile transmission and reception, and user authentication, the apparatus comprising:
a register unit that registers an address corresponding to a user account that is used for the user authentication;
an address rewriting unit that rewrites a sender address to the address registered in the register unit corresponding to the user account if the user authentication is successful; and
a transmission unit that provides the address rewritten by the address rewriting unit upon conducting the Internet facsimile transmission.

2. The Internet facsimile apparatus as claimed in claim 1, wherein the register unit registers the user account in association with a user name and user code.

3. The Internet facsimile apparatus as claimed in claim 1 or 2, further comprising:
an address editing unit that edits the address corresponding to the user account, the editing of the address by the address editing unit being allowed only when the user authentication is successful.

4. The internet facsimile apparatus as claimed in claim 1, 2 or 3, further comprising:
an assigning unit that assigns a reply address based on the user account if the user authentication is successful; and
an assigned address providing unit that provides the reply address assigned by the assigning unit upon conducting the Internet facsimile transmission.

5. A method of transmitting a facsimile message via a network utilising Internet Protocol, the method comprising:
storing addresses and corresponding user account data of a plurality of users for user authentication;
authenticating a user;
preparing a facsimile message for transmission via said network and having a senders address corresponding to the authenticated user; and
transmitting the facsimile message via said network.

6. A computer program comprising code means that, when executed on a computer system, instruct the computer system to effect a method according to claim 5.
